# EUROPEAN PATENT APPLICATION

(11) **EP 4 667 300 A1**
(43) Date of publication of application: **24.12.2025**
(21) Application number: 24182638.7
(22) Date of filing: 17.06.2024
(51) Int. Cl.: B60T 1/06, B60T 17/18, F16D 55/36, F16D 55/40, F16D 66/02

(54) **A WET DISC BRAKE**

(71) Applicant: Meritor Heavy Vehicle Systems Cameri SpA, 28062 Cameri (NO) (IT)
(72) Inventor: Tiziani, Eugenio, 28062 Cameri (IT)
(74) Representative: Whitfield, Jack Stephen

(57) **Abstract**

Aspects of the present invention relate to a wet disc brake for an off-highway vehicle comprising: a brake caliper a disc pack located within the brake caliper and arranged to locate on a vehicle shaft having a longitudinal axis extending in an inboard-outboard direction, the disc pack comprising: a plurality of counter discs arranged in series on the axis; and a plurality of friction discs arranged in series on the axis in an alternating arrangement with the counter discs, each friction disc comprising friction material and being configured to be rotatably fixed to the vehicle shaft; and a piston actuatable within the brake caliper during a brake operation to urge the friction material of the friction discs to engage the counter discs to slow the vehicle; and a contactless wear sensor assembly configured to measure the axial length of the disc pack.

## Description

### Technical Field

The present disclosure relates to a wet disc brake for an off-highway vehicle, a method of detecting the wear of the disc pack of the wet disc brake and an axle assembly comprising the wet disc brake.

### Background

It is known to measure the wear level of a disc pack of a wet disc brake by inserting a tool to measure the wear pack thickness distance between counter discs of the wet disc brake. However, such a measurement cannot be performed in field whole the vehicle is in use. The oil must be removed from the wet disc brake and preparation is required before the check can be made.

Alternatively, a different type of tool can be inserted axially through a recess provided in an axial end of a caliper of the wet disc brake. The amount the tool can be instated into the caliper provides an indication of the wear. Advantageously, this method does not require removal of the oil within the wet disc brake but it is still a manual measurement.

Off-highway vehicles having such a type of brake are often used in relatively hazardous industries such as mining. In such situations, failure of the brake would be extremely disruptive. As well as the safety risk of a malfunctioning brake, there is a significant financial cost. If the brake fails in the middle of a mining operation, the tunnel would likely have to be closed and a recovery vehicle used to bring back the vehicle.

It would therefore be desirable to provide a wet disc brake where the wear of the disc pack within the wet disc brake can be monitored live, so any safety issues can be pre-empted more easily and avoided.

It is an aim of the present invention to address one or more of the disadvantages associated with the prior art.

### Summary of Invention

Aspects and embodiments of the invention provide a wet disc brake, a method of detecting the wear of a disc pack in the wet disc brake, a controller for carrying out the method, and an axle assembly for an off-highway vehicle, as claimed in the appended claims.

According to an aspect of the present invention there is provided a wet disc brake for an off-highway vehicle having a shaft with a longitudinal axis extending in an inboard-outboard direction. The wet disc brake comprises: a brake caliper; a disc pack located within the brake caliper and arranged to locate on the vehicle shaft and a contactless wear assembly. The disc pack comprises: a plurality of counter discs arranged in series on the axis; and a plurality of friction discs arranged in series on the axis in an alternating arrangement with the counter discs, each friction disc comprising friction material and being configured to be rotatably fixed to the shaft; and a piston actuatable within the brake caliper during a brake operation to urge the friction material of the friction discs to engage the counter discs to slow the vehicle. The contactless wear sensor assembly is configured to measure the axial length of the disc pack.

Over time, the friction discs and counter discs will wear, reducing their thickness in the axial direction. To compensate for this and maintain brake performance, the piston will extend further in the axially outboard direction when actuated. After a brake operation, the piston is released and moves back in the inboard direction by a consistent amount such that it will have a starting position that moves in the outboard direction over the life of the brake. This causes the axial length of the disc pack to reduce over time as the friction discs and counter discs are urged in the outboard direction by the piston even when the brake is released. Although the axial length will vary as the disc pack is compressed even more by the piston during the braking operation, a contactless wear sensor assembly enables the axial length of the disc pack to be measured while the vehicle is in operation, both when the brake is in an applied condition and in a released condition. For example, this could enable the trend of the axial length to be monitored to indicate the trend. To provide an indication of the wear rate, the measurements when the brake is in use could be excluded. In any case, these measurements would be rare as a proportion of the total time the vehicle is in use. No disassembly of the brake or manual measurements would be required to obtain the indication of the wear of the disc pack, which is a significant advantage.

The wet disc brake may comprise: a first reference surface that is configured to move in an axially inboard direction as the disc pack wears; and a second reference surface that remains axially fixed. The contactless wear sensor assembly may be configured to measure the axial length of the disc pack by measuring the distance between the first and second reference surfaces.

As the disc pack becomes more worn, the distance between the first and second reference surfaces will decrease. The second reference surface remains static relative to the caliper and as the disc pack wears and compresses, the first reference surface moves closer to the second reference surface.

The first reference surface may be on a first counter disc of the plurality of counter discs. Optionally, the first reference surface may be on an innermost counter disc of the plurality of counter discs.

The innermost counter disc means the disc that is arranged most inboard on the disc pack. As the pack wears, the innermost counter disc will move closer to a radially extending reaction surface of the caliper and the outermost counter disc.

The first counter disc may comprise a radially extending projection configured to engage a corresponding feature on the caliper to allow relative axial movement with the caliper and restrict relative rotation with the caliper. The first reference surface may be located on the projection.

Each radial projection is configured to disperse braking reaction force to the caliper. This location is a good location for the first reference surface as it is radially spaced from the axle and the friction discs so there will be no interference in the function of the brake or with the signal of the contactless wear sensor assembly.

Each counter disc may comprise at least one radially extending projection configured to engage a corresponding feature on the caliper to allow relative axial movement with the caliper and restrict relative rotation with the caliper. Optionally, each counter disc may comprise a plurality of radially extending projections distributed circumferentially around each counter disc.

The projections help to ensure that the counter discs do not rotate when they are engaged by the friction discs, while allowing axial movement so the disc pack can be compressed.

The second reference surface may be a last counter disc of the plurality of counter discs. Optionally, the second reference surface may be on an outermost counter disc of the plurality of counter discs.

The outermost counter disc means the disc that is arranged most outboard on the disc pack.

The projections on the first counter disc and the last counter disc may be circumferentially offset from the projections on each other counter disc of the plurality of counter discs.

The projections on the first and last counter discs can act as the first and second reference surfaces for the contactless wear assembly without the signal being reflected by a projection on any of the intervening counter discs, which could make measurement of the axial length of the disc pack more difficult.

Each projection may be a radially extending lug. The caliper may have an axially extending slot corresponding to each lug and arranged to receive its corresponding lug. Each slot and its corresponding lug may have complimentary shapes.

The complimentary shapes help to avoid relative rotation movement and enables smooth axial movement of the counter discs during a braking operation.

The second reference surface may be a radially extending reaction surface of the caliper configured to engage and retain the disc pack.

If the second reference surface is a radial surface of the caliper, it is by definition fixed relative to the caliper.

The caliper may comprise a housing and a cover axially fixed to the housing. The radially extending reaction surface may be on the cover.

This helps with assembly as the disc pack can be installed inside housing before the cover is then fixed to the housing to retain the disc pack.

The contactless wear sensor assembly may be fixed relative to the brake caliper.

This helps to ensure that the wear sensor assembly remains in the same axial location, so that it can detect when the first reference surface moves in the axially outboard direction over time.

The contactless wear sensor assembly may comprise an ultrasonic emitter for emitting high frequency sound waves through the disc pack and an ultrasonic receiver for detecting reflected sound waves.

According to a further aspect of the present invention, a method of detecting the wear of a disc pack in the wet disc brake of the previous aspect is provided. The method comprises: receiving a signal from the contactless wear sensor assembly; determining an axial length of the disc pack to indicate how much the disc pack has worn; and outputting a signal indicating the amount of wear of the disc pack.

The signal can be sent to the user or an automated system to indicate a live status of the disc pack and/or issue an alert when the disc pack is sufficiently worn to require replacement. This can help avoid safety issues and can the downtime of the vehicle to be appropriately managed.

According to a further aspect of the present invention, a controller for carrying out the method of the previous aspect is provided.

According to a further aspect of the present invention, an axle assembly for an off-highway vehicle is provided. The axle assembly comprises: a shaft in communication with a wheel of the vehicle; and the wet disc brake of the previous aspect, located on the shaft.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of Drawings

One or more embodiments of the invention will now be described, by way of example only, with reference to the accompanying drawings, in which:
Figure 1 is a schematic view of a vehicle, showing suitable locations for a wet disc brake according to the invention;
Figure 2 is a perspective view of a wet disc brake according to an embodiment of the invention;
Figure 3 is a cross-sectional view of the wet disc brake of Figure 2 through the plane 3-3;
Figure 4 is a cross-sectional view of the wet disc brake of Figure 2 through the plane 4-4; and
Figure 5 is an exploded view of the wet disc brake of Figure 1.

### Detailed Description

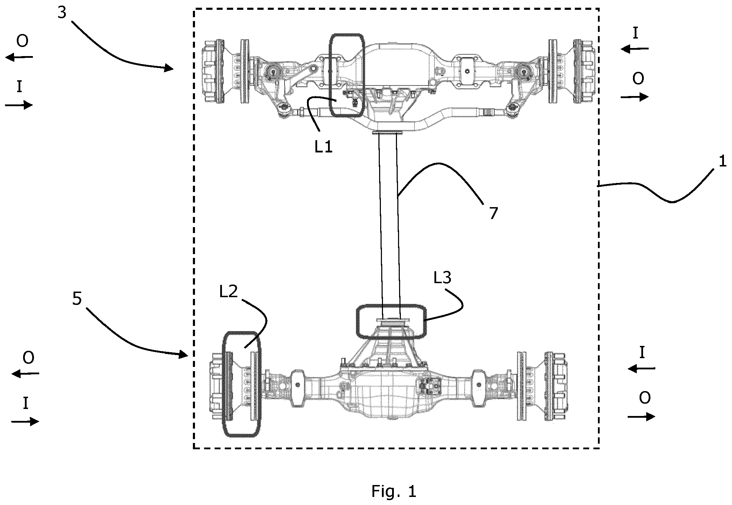

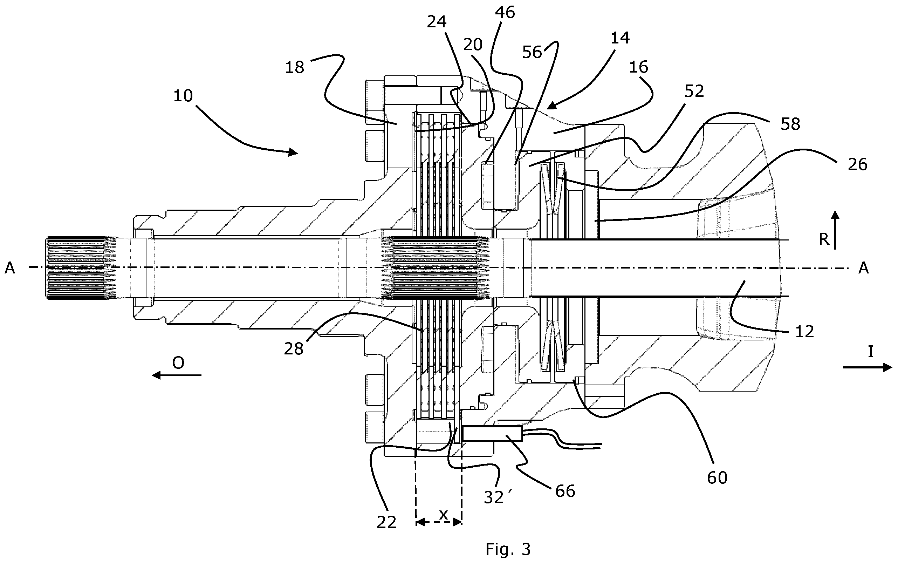

Figure 1 shows example axle assemblies of an off-highway vehicle 1. In this embodiment, Figure 1 shows a front axle assembly 3 with steering capabilities and a rear axle assembly 5 that is typically connected to the front axle assembly 3 via a prop shaft 7. It will be appreciated that in other embodiments, there may be one or more additional axle assemblies, and/or there may be one or more inter-axle differential assemblies (not shown) located between the axle assemblies. Three locations L1, L2 and L3 are shown. These locations are examples of suitable locations for a wet disc brake 10. The directions inboard I and outboard O refer to the orientation of the wet disc brake 10 when fitted to a vehicle in either the locations L1 or L2 and are with reference to the longitudinal centreline of the vehicle. The radial direction R refers to a direction perpendicular to the longitudinal axis of a shaft that the wet disc brake 10 is configured to be located on (axis A-A - see Figure 3). Various orientations of the wet disc brake 10 are described. For example, if the wet disc brake 10 is located in location L3, it will be appreciated that the directions inboard I and outboard O no longer refer to the longitudinal centreline of the vehicle 1. It will be understood, however, that any description using the terms outboard and inboard also applies to the wet disc brake 10 when it is in this alternative orientation at location L3. The same terms are simply used for consistency and simplicity, even though the wet disc brake 10 has been rotated by 90 degrees. It will also be appreciated that the wet disc brake 10 could be located in other locations to those shown at L1, L2, and L3. For example, any shaft within the vehicle that may benefit from its speed being controllable would be suitable for locating the wet disc brake 10, for example any drive axle or driven axle.

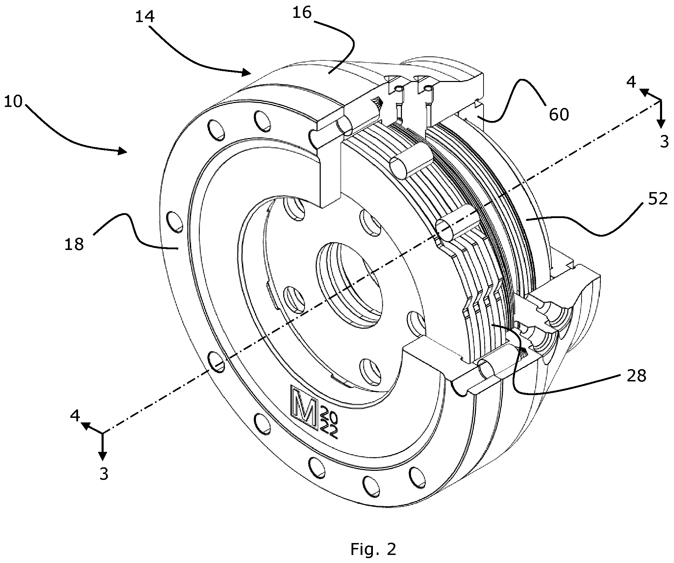

With reference to Figure 2, the wet disc brake 10 is intended for use in an off-highway vehicle such as a vehicle for mining, construction, vehicle, material handling, or agriculture.

The wet disc brake 10 includes a brake caliper 14. Located within the caliper 14 are a disc pack 28, a service piston 46, a parking piston 52, and parking springs 58. The disc pack 28, the service piston 46, the parking piston 52, and the parking springs 58 are co-axially arranged on axis A-A and configured to locate on a shaft. In this embodiment, the shaft is a vehicle axle 12. The axle 12 could be a drive axle or a driven axle. As will be described in more detail below, a contactless wear assembly is provided to measure the wear of the disc pack 28. In this embodiment, the contactless wear assembly is in the form of an ultrasonic wear sensor assembly 66. As described in more detail below, in this embodiment, the ultrasonic wear sensor assembly 66 is located inboard of the disc pack 28 and directs ultrasonic waves in the outboard direction O. In other embodiments, the ultrasonic wear sensor assembly 66 could be in a different location outboard of the disc pack 28 and instead direct ultrasonic waves in the inboard direction I.

In this embodiment, the caliper 14 is a two-part caliper. The caliper 14 has a housing 16 and a cover plate 18. The cover plate 18 is fixed to an outboard face of the housing 16 in any suitable way. In this embodiment, the cover plate 18 has an annular rim with a plurality of circumferentially distributed through bores for locating fasteners that locate in corresponding bores on the outboard face of the housing 16 to fix the cover plate 18 to the housing 16. Alternatively, welding or a suitable adhesive could be used, but this would make maintenance more difficult. The cover plate 18 helps with assembly as the disc pack 28 and service piston 46 can be installed inside the housing 16 before the cover plate 18 is then fixed to the housing 16 to retain the disc pack 28 and the service piston 46. The cover plate 18 has an annular shoulder portion extending radially inwardly from the rim. An inboard face of the shoulder portion defines an reaction surface 20 of the cover plate 18. In this embodiment, the reaction surface 20 extends radially and faces the inboard direction.

The caliper housing 16 is substantially cylindrical but having a central through bore with an internal diameter that varies to define a disc pack chamber 22, a service brake chamber 24 and a parking brake chamber 26. In this embodiment, the disc pack chamber 22 is located most outboard and has the largest diameter. The diameter of the disc pack chamber 22 is typically between 200mm and 300mm. The disc pack chamber 22 locates the disc pack 28. Typically, the disc pack chamber 22 contains a suitable lubricant, such as lubricating oil to preserve the life of the disc pack 28 as much as possible. Distributed circumferentially around an internal surface of the disc pack chamber 22 are a plurality of axially extending slots 23 extending radially into the internal surface of the disc pack chamber 22. The slots 23 extend substantially the entire axial length of the disc pack chamber 22. Typically, the slots 23 are machined into the internal surface of the disc pack chamber 22 but could be manufactured in any suitable way. As described in more detail below, the slots 23 have a cross-section that is configured to correspond to projections that extend radially from the counter discs 30. In this embodiment, the slots 23 have a cross-section that is a rounded off rectangle, to reduce stress points. However, it will be appreciated that any suitable cross-sectional shape could be used.

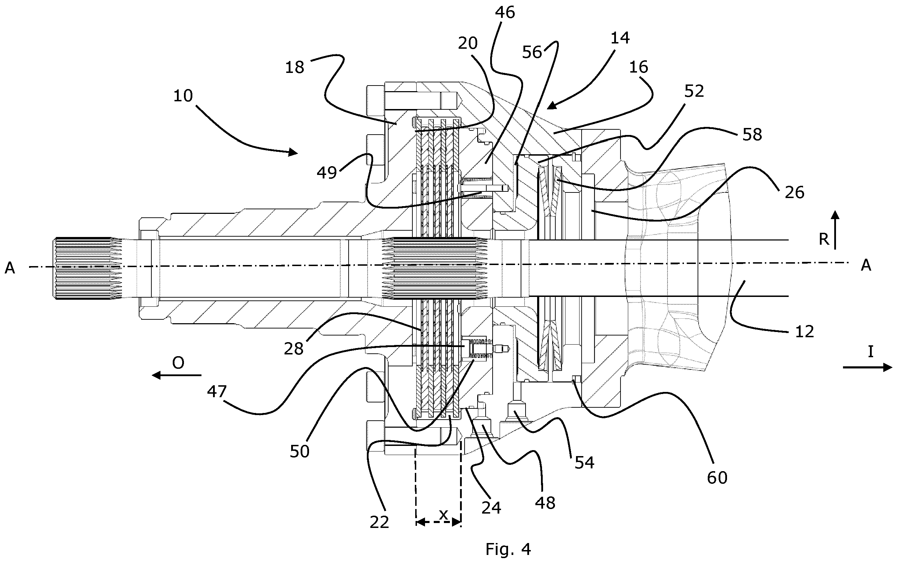

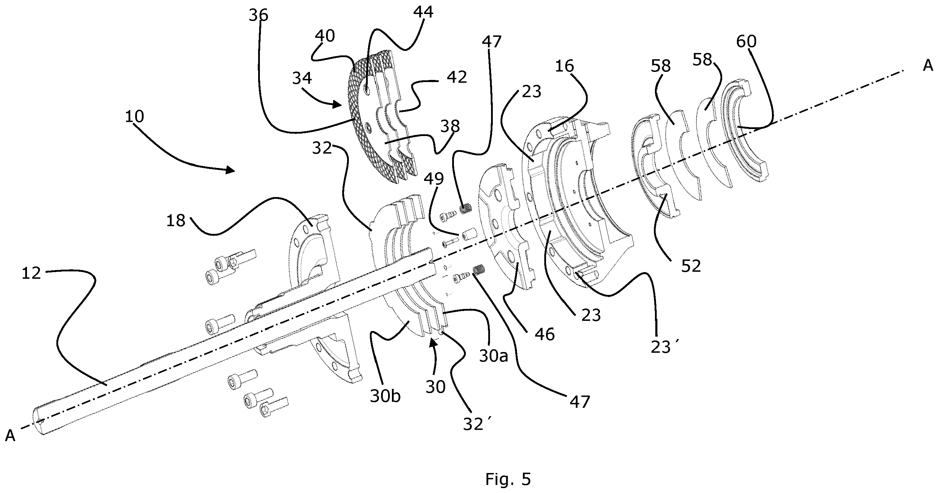

Inboard of the disc pack chamber 22 is a service brake chamber 24. The service brake chamber 24 locates the service piston 46. The service brake chamber 24 has an internal diameter that substantially matches the outer diameter of friction discs 34 (described in more detail below) of the disc pack 22. This helps to ensure that the service piston 46 lines up with the friction discs 34 to reduce the risk of uneven wear of the disc pack 22. The service piston 46 has a central bore which is typically splined such that it can locate on the axle 12 and be rotatably fixed to the axle 12 but free to slide axially. During a braking operation, the service piston 46 is actuatable within the service brake chamber 24 such that it engages an inboard surface of the disc pack 28. As described in more detail below, this will compress the disc pack 28 to slow the vehicle. A service piston fluid chamber 50 is defined between an inboard surface of the service piston 46 and a radially extending outboard facing surface of the service brake chamber 24. The service piston fluid chamber 50 is in communication with a source of hydraulic fluid via the service piston fluid conduit 48 in a radially outer surface of the service brake chamber 24. To actuate the service piston 46, fluid enters through the service piston fluid conduit 48, pressurizing the service piston fluid chamber 50 and urging the service piston 46 in the outboard direction to engage the disc pack 28. When the hydraulic pressure is released, the service piston 46 will return in the inboard direction to a rest position due to an urging force. In this embodiment, the service piston 46 has holes that locate a plurality of return spring arrangements 47 (see Figures 4 and 5) to urge the service piston 46 back to its rest position once the pressure is released. The service piston 46 also has holes that locate a plurality of self-adjusting arrangements 49 (see Figures 4 and 5) such that the service piston 46 returns by a defined amount each time to ensure that the starting point of the service piston 46 moves in the outboard direction over time to always remains adjacent the disc pack 22 with an appropriate clearance.

Inboard of the service brake chamber 24 is the parking brake chamber 26. The parking brake chamber 26 locates the parking piston 52. The parking piston 52 has a central bore which is typically splined such that it can locate on the axle 12 and be rotatably fixed to the axle 12 but free to slide axially. A parking piston fluid chamber 56 is defined between an outboard surface of the parking piston 52 and a radially extending inboard facing surface of the parking brake chamber 26. The parking piston fluid chamber 56 is in communication with a source of hydraulic fluid via the parking piston fluid conduit 54 in a radially outer surface of the parking brake chamber 26. Engaging an inboard facing surface of the parking piston 52 are a plurality of parking springs 58. In this embodiment, the springs 58 are Belville washers, but any suitable biasing arrangement can be used. The springs 58 are biased in the outboard direction such that they apply a force to the parking piston 52. The springs 58 are preloaded and retained by an outboard cover plate 60 that is inserted into the parking brake chamber 26 during assembly after the parking piston 52 and springs 58 have been located. The cover plate 60 is retained by a snap ring 62 that locates in a circumferential slot in an internal surface of the parking brake chamber 26. In other embodiments, however, the cover plate 60 could be retained in an alternative suitable way, for example with fastening elements. Typically, the cover plate 60 is fixed in a removable way such that maintenance is possible. The service brake chamber 24 typically has a larger diameter than the parking brake chamber 26 due to the pressure used in each chamber. The pressure within the service brake chamber 24 is typically higher than the pressure within the parking brake chamber 26.

During normal use of the brake and while the vehicle is running, the parking piston fluid chamber 56 is pressurized with hydraulic fluid. This counters the biasing force of the parking springs 58. When a user wishes to apply the parking brake to lock the wheels of the vehicle, i.e., when the vehicle is stationary, the hydraulic fluid is evacuated from the parking piston fluid chamber 56 through the parking piston fluid conduit 54. As there will no longer be any countering force, the parking springs 58 will urge the parking piston 52 in the outboard direction to engage an inboard surface of the service piston 46 and apply the brake. To release the parking brake again, hydraulic fluid is introduced into the parking piston fluid chamber 56 to urge the parking piston 52 and parking springs 58 back in the inboard direction, such that the service piston 46 is no longer engaged and is free to returning the inboard direction back to its rest position. This type of parking brake is known as a spring applied, hydraulic released brake (SAHR).

The internal surfaces of the service brake chamber 24 and the parking brake chamber 26 are typically machined such that they are smooth enough that the service piston 46 and parking piston 52 can easily slide within them. Suitable sealing elements are provided between the engaging surfaces of the service piston 46 and the service brake chamber 24, and the parking piston 52 and the parking brake chamber 26, to contain the hydraulic fluid in the service piston fluid chamber 50 and the parking piston fluid chamber 56. In this embodiment, the sealing elements are in the form of O-rings.

The disc pack 28 includes multiple counter discs 30 arranged in series on the axis A-A and multiple friction discs 34 also arranged in series on the axis A-A. In this embodiment, the friction discs 34 are in an alternating arrangement with the counter discs 30 so the counter disc 30 can react the sheer forces and prevent damage to the friction discs 34 or other components, but any suitable arrangement could be used. In this embodiment, there are four counter discs 30 and three friction discs 34, but any suitable number could be used as long as the friction discs 34 are sandwiched between the counter discs 30.

In this embodiment, each counter disc 30 is an annular ring. Each counter disc 30 has an outer diameter substantially equal to the internal diameter of the disc pack chamber 22 but slightly lower such that there is a radial spacing, and the counter discs 30 do not contact the internal surface of the disc pack chamber 22. In this embodiment, each counter disc 30 has an inner diameter that is around 20mm less than the outer diameter of the counter disc 30 such that the counter discs 30 are radially spaced from the axle 12. Each counter disc 30 includes at least one radially extending projection configured to engage a corresponding feature on the caliper 14 to allow relative axial movement with the caliper 14 but restrict relative rotation of the counter discs 30 and the caliper 14. In this embodiment, each radial projection is a radially extending lug 32. Each lug 32 is shaped as a rounded off rectangle, to correspond to the cross-sectional shape of the slots 23. Each lug 32 is received in a corresponding slot 23. The complimentary shapes help to avoid relative rotation movement and enables smooth axial movement of the counter discs 30 during a braking operation, as described in more detail below. In this embodiment, each counter disc 30 has four circumferentially distributed lugs 32 to correspond to four circumferentially distributed slots 23. In other embodiments, however, any suitable number of lugs 32 and slots 23 could be provided. This could be more or less than four.

In this embodiment, each friction disc 34 is an annular ring. Each friction disc 34 includes an outer ring portion 36 and an inner ring portion 38 radially inwardly of the outer ring portion 36. In this embodiment, the outer ring portion 36 has an outer diameter and an inner diameter that substantially match the outer diameter and inner diameter of the counter discs 30 (excluding the lugs 32). The outer ring portion 36 typically includes friction material 40, which is wear resistant. In this embodiment, the friction material is a paper-based material with a pattern to increase the surface area, e.g. a waffle pattern to improve heat distribution. The paper-based material is adhered to the outer ring portion 36. The inner ring portion 38 has a central bore 42. In this embodiment, the central bore 42 includes splines that engage with corresponding splines on the axle 12 to ensure that each friction disc 34 is rotationally fixed to the axle 12 but movable in the axial direction along the axis A-A. In this embodiment, the inner ring portion 38 also includes a least one through hole 44. In this embodiment, each friction disc 34 has five through holes 44 distributed circumferentially around the central bore 42. The through holes 44 allow lubricant to pass through, such that the disc pack 28 remains lubricated. Typically, the lubricant reaches the half-way level of the disc pack chamber 22. When the service piston 46 is actuated, the friction material 40 of each friction disc 34 contacts an adjacent counter disc 30. As each friction disc 34 is rotatably fixed to the axle 12 via the spines, when the friction material 40 of each friction disc 34 contacts an adjacent counter disc 30, the rotation of the axle 12 is impeded and the vehicle slows.

Over time, the friction discs 34 will wear. The counter discs 30 may also wear, though to a lesser extent. The result of this is that the axial length x (see Figure 3) of the disc pack 28 will reduce over time. By monitoring this axial length x, the amount of wear can be determined and the disc pack 28 replaced when necessary, at a convenient time and before a safety issue can occur.

To allow the axial length x of the disc pack 28 to be determined, the wet disc brake 10 includes a first reference surface that is configured to move in an axially outboard direction as the disc pack 28 wears and a second reference surface that remains axially fixed. As described in more detail below, a contactless wear sensor assembly is configured to determine the axial length x of the disc pack 28 by measuring the distance between the first and second reference surfaces.

The first reference surface is on a first counter disc of the plurality of counter discs 30. In this embodiment, the first reference surface is on an innermost counter disc 30a (see Figure 5) of the plurality of counter discs 30. The innermost counter disc 30 is the counter disc 30 that is arranged most inboard of the counter discs 30 of the disc pack 30. As the disc pack 28 wears and compresses, the innermost counter disc 30 will move in the outboard direction, closer to the radial surface of the caliper and an outermost counter disc 30b. Specifically, in this embodiment, the first reference surface is a lug 32' that is circumferentially remote from the other lugs 32 of the innermost counter disc 30a. The lug 32' locates in a corresponding slot 23' (see Figure 5). The other counter discs 30 of the disc pack 28 do not have a lug 32 in the same circumferential position as the lug 32'. The first reference surface is radially spaced from the axle 12.

In this embodiment, the second reference surface is the reaction surface 20 of the cover plate 18. As this surface is part of the caliper 14, it will remain axially fixed relative to the caliper as the disc pack 28 wears.

It will be appreciated that the first and second reference surfaces may be in other locations of the disc pack 28 in other embodiments. For example, the first and/or second reference surfaces may be on a friction disc 34 or on a counter disc 30 that is not the first or last counter disc. In a further alternative embodiment, the second reference surface may be on a last counter disc of the plurality of counter discs 30. In other words, the second reference surface may be on the outermost counter disc 30b (see Figure 5) of the plurality of counter discs 30. The outermost counter disc 30b is the counter disc 30 that is arranged most outboard of the counter discs of the disc pack 28. Specifically, in this alternative embodiment, the second reference surface would on one of the lugs 32 of the outermost counter disc 30b. The second reference surface will be on the lug 32 of the outermost counter disc 30b that aligns circumferentially with a lug 32 or the lug 32' of the innermost counter disc 30a that would locate the first reference surface.

In another alternative embodiment, the other counter discs 30 could have one fewer lug 32 than the innermost counter disc 30a and/or the outermost counter disc 30b. As the projections on the innermost counter disc 30a and the outermost counter disc 30b in this embodiment would be circumferentially offset from the projections on each other counter disc 30 of the plurality of counter discs 30, the signal of the contactless wear sensor assembly (described below) would not be reflected by a projection on any of the intervening counter discs 30. This could make measurement of the axial length x of the disc pack more reliable.

The axial length x of the disc pack 28 is measured by at least one contactless wear sensor assembly. In this embodiment, the contactless wear sensor assembly is in the form of an ultrasonic wear sensor assembly 66. The ultrasonic wear sensor assembly 66 includes an ultrasonic emitter for emitting high frequency sound waves through the disc pack 28 and an ultrasonic receiver for detecting reflected sound waves. In this embodiment, the ultrasonic wear sensor assembly 66 is radially offset from the axle 12. In this embodiment, the ultrasonic wear sensor assembly 66 inboard of the disc pack 28, in line with the lug 32' of the innermost counter disc 30a that defines the first reference surface.

The ultrasonic wear sensor assembly 66 is fixed relative to the brake caliper 12. This helps to ensure that the ultrasonic wear sensor assembly 66 remains in the same axial location, so that it can detect when the first reference surface moves in the axially outboard direction over time. In this embodiment, the ultrasonic wear sensor assembly is located in the caliper 14 (see Figure 3), inboard of the disc pack 28.The emitter of the ultrasonic wear sensor assembly 66 emits ultrasonic waves in an axially outboard direction through the disc pack 28. Some of the waves will be reflected by the first reference surface and detected by the receiver of the ultrasonic wear sensor assembly 66. Some of the waves will carry on past the first reference surface and be reflected by the second reference surface and detected by the receiver of the ultrasonic wear sensor assembly 66. As the speed of the ultrasonic waves is known, the time delay between the reflections can be used to calculate the distance between the first and second reference surfaces. In an alternative embodiment, the ultrasonic wear sensor assembly 66 is located axially outboard of the caliper 14, for example in the cover plate 18 and emits ultrasonic waves in an axially inboard direction through the disc pack 28. Over time, the friction discs 34 and counter discs 30 will wear, reducing their thickness in the axial direction. To compensate for this and maintain brake performance, the service piston 46 will extend further in the axially outboard direction when actuated. After a brake operation, the service piston 46 is released and moves back in the inboard direction by a consistent amount such that it will have a starting position that moves in the outboard direction over the life of the brake. This cause the axial length x of the disc pack 28 to reduce over time as the friction discs 34 and counter discs 30 are urged in the outboard direction by the service piston 46 even when the brake 10 is released. Although the axial length x will vary as the disc pack 28 is compressed even more by the service piston 46 during a braking operation, a contactless wear sensor assembly enables the axial length x of the disc pack 28 to be measured while the vehicle is in operation, both when the brake 10 is in an applied condition and in a released condition. For example, the change in axial length x could be monitored over time to determine the trend. To provide an indication of the wear rate, the measurements when the brake 10 is in use could be excluded, for example by a computer algorithm. In any case, these measurements would be rare as a proportion of the total time the vehicle is in use. No disassembly of the brake or manual measurements would be required to obtain the indication of the wear of the disc pack, which is a significant advantage.

As the disc pack 28 wears, the distance between the first and second reference surfaces should reduce until the distance between the first and second reference surfaces reaches a minimum acceptable distance, which is an indication that the disc pack 28 should be replaced.

In this embodiment, the vehicle includes a controller for carrying out a method of detecting the wear of the disc pack 28. The controller is configured to receive a signal from the contactless wear sensor assembly. From this signal it will determine an axial length x of the disc pack 28 to indicate how much the disc pack 28 has worn. It will output a signal indicating the amount of wear of the disc pack 28. The signal can be sent to the user or an automated system to indicate a live status of the disc pack and/or issue an alert when the disc pack 28 is sufficiently worn to require replacement. This can help avoid safety issues and can the downtime of the vehicle to be appropriately managed.

Where the word 'or' appears, this is to be construed to mean 'and/or'. This is such that items referred to are not necessarily mutually exclusive and may be used in any appropriate combination.

The invention has been described above with reference to one or more specific embodiments. However, it will be appreciated that various changes and modifications can be made without departing from the scope of the invention as defined in the claims.

The appended claims set out combinations of features described above. However, the scope of the present disclosure is not limited to these combinations claimed. Instead, the scope of the present disclosure extends to encompass any combination of features herein disclosed.

## Claims

1. A wet disc brake for an off-highway vehicle having a shaft with a longitudinal axis extending in an inboard-outboard direction, the wet disc brake comprising:
a brake caliper;
a disc pack located within the brake caliper and arranged to locate on the vehicle shaft, the disc pack comprising:
a plurality of counter discs arranged in series on the axis; and
a plurality of friction discs arranged in series on the axis in an alternating arrangement with the counter discs, each friction disc comprising friction material and being configured to be rotatably fixed to the shaft; and
a piston actuatable within the brake caliper during a brake operation to urge the friction material of the friction discs to engage the counter discs to slow the vehicle; and
a contactless wear sensor assembly configured to measure the axial length of the disc pack.

2. The wet disc brake of claim 1, wherein the wet disc brake comprises:
a first reference surface that is configured to move in an axially inboard direction as the disc pack wears; and
a second reference surface that remains axially fixed,
wherein the contactless wear sensor assembly is configured to measure the axial length of the disc pack by measuring the distance between the first and second reference surfaces.

3. The wet disc brake of claim 2, wherein the first reference surface is on a first counter disc of the plurality of counter discs, optionally wherein the first reference surface is on an innermost counter disc of the plurality of counter discs.

4. The wet disc brake of claim 3, wherein the first counter disc comprises a radially extending projection configured to engage a corresponding feature on the caliper to allow relative axial movement with the caliper and restrict relative rotation with the caliper, wherein the first reference surface is located on the projection.

5. The wet disc brake of claim 4, wherein each counter disc comprises at least one radially extending projection configured to engage a corresponding feature on the caliper to allow relative axial movement with the caliper and restrict relative rotation with the caliper, optionally wherein each counter disc comprises a plurality of radially extending projections distributed circumferentially around each counter disc.

6. The wet disc brake of any of claims 2 to 5, wherein the second reference surface is a last counter disc of the plurality of counter discs, optionally wherein the second reference surface is on an outermost counter disc of the plurality of counter discs.

7. The wet disc brake of claim 6 when dependent on claim 5, wherein the projections on the first counter disc and the last counter disc are circumferentially offset from the projections on each other counter disc of the plurality of counter discs.

8. The wet disc brake of any of claims 4 to 7, wherein each projection is a radially extending lug and the caliper has an axially extending slot corresponding to each lug and arranged to receive its corresponding lug, wherein each slot and its corresponding lug have complimentary shapes.

9. The wet disc brake of any of claims 2 to 5, wherein the second reference surface is a radially extending reaction surface of the caliper configured to engage and retain the disc pack.

10. The wet disc brake of claim 9, wherein the caliper comprises a housing and a cover axially fixed to the housing, wherein the radially extending reaction surface is on the cover.

11. The wet disc brake of any previous claim, wherein the contactless wear sensor assembly is fixed relative to the brake caliper.

12. The wet disc brake of any previous claim, wherein the contactless wear sensor assembly comprises an ultrasonic emitter for emitting high frequency sound waves through the disc pack and an ultrasonic receiver for detecting reflected sound waves.

13. A method of detecting the wear of a disc pack in the wet disc brake of any previous claim, the method comprising:
receiving a signal from the contactless wear sensor assembly;
determining an axial length of the disc pack to indicate how much the disc pack has worn; and
outputting a signal indicating the amount of wear of the disc pack.

14. A controller for carrying out the method of claim 13.

15. An axle assembly for an off-highway vehicle comprising:
a shaft in communication with a wheel of the vehicle; and
the wet disc brake of any of claim 1 to 12, located on the shaft.
